# FASCICULE DE BREVET EUROPEEN

(11) **EP 4 545 393 B1**
(45) Date de publication et mention de la délivrance du brevet: **15.04.2026**
(21) Numéro de dépôt: 24208510.8
(22) Date de dépôt: 23.10.2024
(51) Int. Cl.: B62M 11/06, F16H 3/083

(54) **DISPOSITIF DE CHANGEMENT DE VITESSE ET ENGIN DE MOBILITÉ ASSOCIÉ**
SCHALTVORRICHTUNG UND MOBILITÄTSVORRICHTUNG DAFÜR
GEAR SHIFT DEVICE AND ASSOCIATED MOBILITY DEVICE

(30) Priorité: 25.10.2023 FR 2311611
(43) Date de publication de la demande: 30.04.2025
(73) Titulaire: VALEO EMBRAYAGES, 80009 Amiens (FR)
(72) Inventeur: CIMA, Massimo, 12084 Mondovi (IT); GUIDI, Martina, 12084 Mondovi (IT); AIRALDI, Alfio, 12084 Mondovi (IT); CANTELLA, Andrea, 12084 Mondovi (IT); CALANDRI, Fabrizio, 12084 Mondovi (IT); SPAGNOLO, Matteo, 12084 Mondovi (IT)
(74) Mandataire: Valeo Powertrain Systems

(56) Documents cités:
- FR-A1- 2 865 784
- FR-A1- 2 975 367
- US-A1- 2010 162 841

## Description

La présente invention concerne le domaine des dispositifs de changement de vitesses, et plus particulièrement un dispositif de changement de vitesse pour un engin de mobilité utilisant au moins une propulsion électrique, et par exemple un vélo à assistance électrique. Lors du fonctionnement d'un engin de mobilité, une force motrice est transmise aux roues par l'intermédiaire d'un système de manivelle tournant autour d'un axe de pédalier qui entraîne la roue arrière généralement par une chaîne.

Il est déjà connu dans l'art antérieur des boites de vitesses pour engin de mobilité Par exemple, la demande de brevet FR2975367 A1 divulgue un dispositif de changement de vitesses pour vélos comportant une boîte de vitesses à engrenages et une navette coulissante pour effectuer la sélection du rapport de vitesse. La navette agit sur un système à cliquets, via une bille ou un ressort, qui vont à leur tour agir sur des pignons d'entrée pour enclencher la vitesse choisie. L'inconvénient de ce type de système provient du fait qu'il comporte de nombreuses pièces, ce qui complexifie sa fabrication, son montage et le rend plus couteux.

La présente invention a donc pour objet de pallier un ou plusieurs des inconvénients des dispositifs de l'art antérieur en proposant un dispositif de changement de vitesse simplifié. Pour cela la présente invention propose un dispositif de changement de vitesse pour engin de mobilité comportant :
- un arbre de sélection dans lequel sont disposées une navette et une vis sans fin,
- un actionneur de changement de vitesse agencé pour déplacer la navette le long de la vis sans fin entre au moins deux positions, et engager un rapport sélectionné,
- au moins deux cliquets disposés au niveau de l'arbre de sélection assurant la fonction d'enclenchement du rapport sélectionné
la navette comportant au moins deux moyens de sélection d'un rapport.

Selon un mode de réalisation de l'invention, la navette comporte au moins deux logements pour l'insertion des moyens de sélection.

Selon un mode de réalisation de l'invention, la navette comporte trois logements pour trois moyens de sélection disposés à 120 degrés les uns des autres autour de la navette.

Selon un mode de réalisation de l'invention, le moyen de sélection est formé par un dispositif à piston.

Selon un mode de réalisation de l'invention, le dispositif à piston est un piston à bille.

Selon l'invention, le moyen de sélection est formé par un corps à l'intérieur duquel sont logés un ressort et une bille.

Selon un mode de réalisation de l'invention, le corps est ajusté à la taille de la bille pour permettre son maintien en place.

Selon l'invention, le corps est en plastique.

L'invention concerne également un engin de mobilité, notamment engin de mobilité à assistance électrique, comportant un dispositif de changement de vitesse selon l'invention. Selon un mode de réalisation de l'invention, l'engin est un vélo à assistance électrique D'autres buts, caractéristiques et avantages de l'invention seront mieux compris et apparaîtront plus clairement à la lecture de la description faite, ci-après, en se référant aux figures annexées, données à titre d'exemple et dans lesquelles:
- la [Fig. 1] est une vue d'un engin de mobilité selon un des aspects de l'invention,
- la [Fig. 2] illustre l'ensemble de transmission de l'engin de mobilité de la Figure 1,
- les [Fig. 3a] et Fig. 3b] illustre une vue en coupe d'une partie de l'ensemble de transmission a) et de l'ensemble de transmission b),
- la [Fig. 4] est une vue en coupe d'un dispositif de changement de vitesse selon l'invention,
- la [Fig. 5] est une vue en élévation de la navette selon l'invention,
- la [Fig. 6] est une représentation schématique vue en coupe du moyen de sélection selon l'invention,
- la [Fig. 7] est une vue en élévation d'une partie du dispositif avec élément de blocage du cliquet selon l'invention.

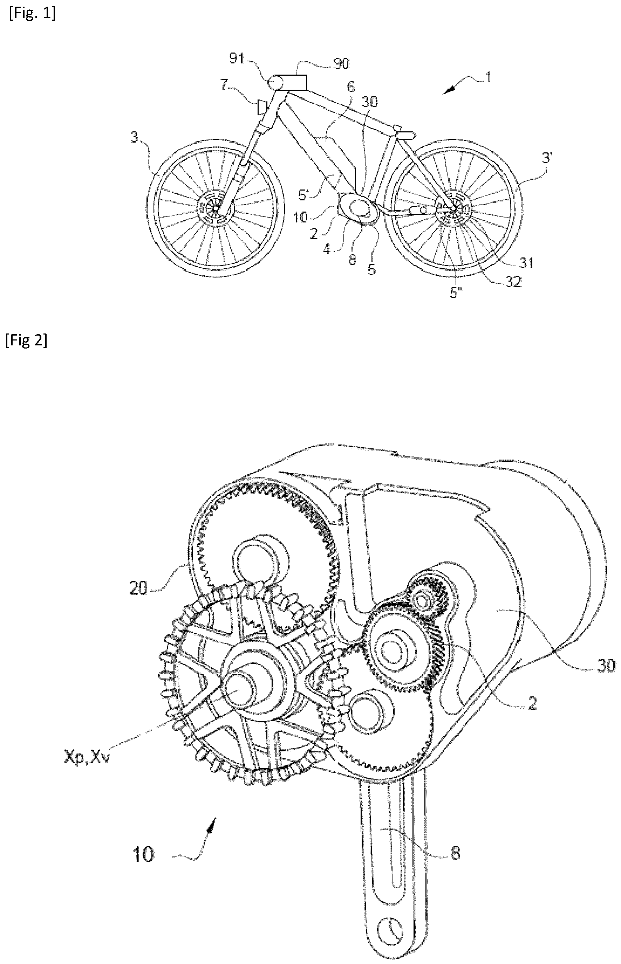

La figure 1 [Fig. 1] illustre un engin de mobilité 1 selon un des aspects de l'invention. L'engin 1 est ici un vélo à assistance électrique comportant un moteur électrique 2. Le moteur électrique 2 est agencé pour assurer une partie de la propulsion de l'engin.

Le vélo comporte au moins deux roues 3, 3 'auxquelles est fournie une force motrice, par l'intermédiaire de deux pédales tournant autour d'un axe de pédalier d'axe Xp [Fig. 2] qui entraîne la roue arrière par exemple par une chaîne, ou tout autre moyen de transmission lors de son utilisation.

L'engin 1 comporte également une unité de pilotage 4 ainsi que plusieurs capteurs 5, 5', 5", situés par exemple au niveau du pédalier, sur le cadre du vélo ou au niveau d'une roue 3, 3'.

L'engin 1 ici représenté comporte également un dispositif de stockage d'énergie sous forme d'une batterie 6, un système d'éclairage 7, un pédalier 8 d'axe Xp [Fig. 2], un système de localisation et/ou navigation 90 ainsi qu'un système interface homme-machine 91 comportant notamment un écran tactile apte à afficher des informations pour et/ou prendre en compte les demandes dudit utilisateur. Le système interface homme-machine 91 est en particulier relié au système de localisation 90 et sert d'interface de navigation. L'invention n'est pas limitée à un système interface homme-machine particulier, et peut comporter tout système connu de l'homme du métier.

Les roues 3, 3' sont munies d'un système de freinage 31, comportant notamment des freins à disque 32.

L'engin 1 comporte un ensemble de transmission 10 illustré [Fig. 2]. L'ensemble de transmission 10 comporte un dispositif de changement de vitesse 20 selon l'invention et le moteur électrique 2 pour fournir une partie de la puissance pour la propulsion de l'engin 1. Selon un mode de réalisation de l'invention, l'ensemble de transmission 10 est au moins en partie logé dans un boîtier 30 positionné au niveau du pédalier 8 dont l'axe Xp est confondu avec l'axe de sortie Xᵥ du dispositif de changement de vitesse 20.

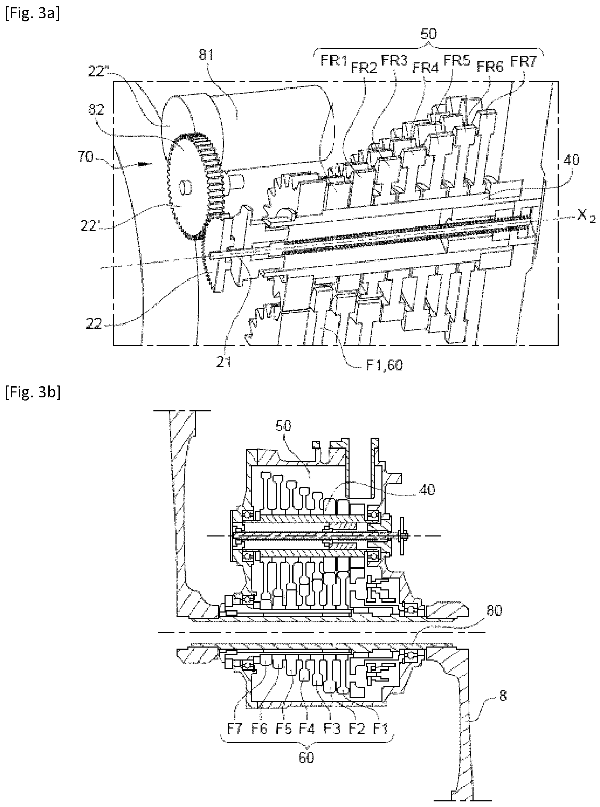

Selon un mode de réalisation de l'invention, le dispositif de changement de vitesse 20 illustré [Fig. 3a] et [Fig. 3b] comporte au moins 2 rapports, et par exemple 3 ou 7 rapports entre un premier rapport dit rapport n°1 et un rapport supérieur dit rapport n°3 ou n°7. Selon un mode de réalisation de l'invention, le dispositif de changement de vitesse 20 comporte une série de sept pignons de sortie 60 d'axe X, de référence F₁ à F₃ ou F₇, solidaires en rotation d'un arbre creux 80 et une série de sept pignons d'entrée 50, de référence Fr₁ à Fr₃ ou Fr₇ agencés pour tourner librement autour de l'arbre de sélection 40.

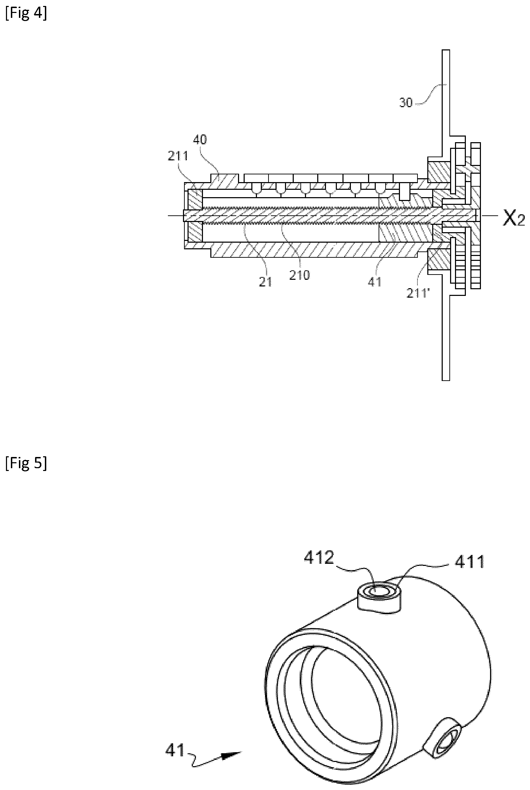

Selon un mode de réalisation de l'invention, l'arbre de sélection 40 illustré [Fig. 4] loge une navette 41 entourant une vis sans fin 21 du dispositif de changement de vitesse 20.

L'engin 1 selon l'invention, comporte un actionneur de changement de vitesse 70 agencé pour déplacer la navette 41 le long de la vis sans fin 21 par une liaison cinématique hélicoïdale, entre au moins 2 positions et par exemple entre 3 ou 7 positions de P₁ à P₃ ou P₇ et engager un rapport sélectionné.

Selon un mode de réalisation de l'invention, l'actionneur de changement de vitesse 70 comporte des moyens électriques de déplacement de la navette 41, sous forme d'un motoréducteur. Celui-ci comporte un moteur 81 et un réducteur 82.

Selon un mode de réalisation de l'invention, le motoréducteur comporte également un pignon 22 sur l'axe de la vis sans fin 21, un pignon 22' intermédiaire et un pignon 22‴ sur l'axe Xm du moteur 81. Les dentures des pignon 22, 22', 22" peuvent être droites comme illustré ou hélicoïdales dans une variante non illustrée.

Le guidage en rotation de la vis sans fin 21 est par exemple assuré à l'aide de roulements à chacune de ses extrémités.

Selon un mode de réalisation de l'invention, la navette 41 illustrée [Fig. 5] est configurée pour, lors de son déplacement, se positionner sous le pignon du rapport sélectionné, et enclencher ce rapport.

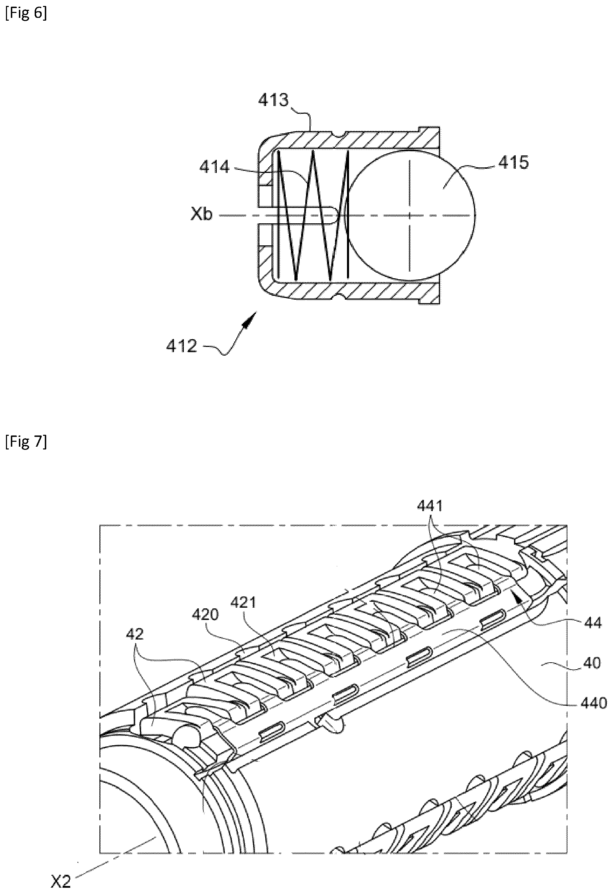

Dans le cadre de l'invention, la navette 41 comporte des moyens de sélection 412 d'un rapport illustrés [Fig. 6] formés par un dispositif à piston. Selon un mode de réalisation de l'invention le dispositif à piston 412 est un piston à bille.

Selon un mode de réalisation de l'invention, la navette 41 comporte au moins un logement 411 pour l'insertion d'un moyen de sélection 412. Selon un mode de réalisation de l'invention, la navette 41 comporte trois logements 411 pour trois moyens de sélection 412 disposés à 120 degrés les uns des autres autour de la navette. Les moyens de sélection 412 sont disposés de façon à coopérer avec des cliquets 42 pour enclencher un rapport sélectionné.

Selon un mode de réalisation de l'invention, les moyens de sélection 412 sont formés par un corps 413 à l'intérieur duquel sont logés un ressort 414 et une bille 415. Le ressort 414 est disposé au fond du logement, et la bille 415 est disposée par-dessus du ressort de façon à dépasser du corps 413 selon l'axe Xb. La bille 415 forme une surface qui permet de pousser un cliquet 42 qui va à son tour enclencher le rapport sélectionné. Grace au ressort 414, la bille 415 peut se rétracter ou dépasser du corps 413.

Selon un mode de réalisation de l'invention, le corps 413 est ajusté à la taille de la bille 415 pour permettre son maintien en place. Un tel moyen de sélection limite le nombre de pièces utilisées pour le dispositif de changement de vitesses.

Selon un mode de réalisation de l'invention, le corps 413 est en plastique.

Le moyen de sélection 412 est inséré dans le logement 411 formé dans la navette 41. Plus précisément, c'est le corps 413 du moyen de sélection 412 qui est inséré dans le logement 411.

Selon un mode de réalisation de l'invention, le moyen de sélection 412 est inséré en force et/ ou collé ou fixé par tous moyens appropriés.

Ainsi, lors d'un changement de rapport de vitesse la vis sans fin 21 est entrainée en rotation par l'actionneur de changement de vitesse 70 provoquant le mouvement axial de l'écrou 210 de la vis 21 qui entraine la navette 41, le moyen de sélection via la bille se positionne sous un cliquet ce qui permet le passage de rapport. Grâce à la liaison pivot ainsi réalisée le mouvement de rotation de la vis sans fin 21 est transformé en mouvement de translation de la navette 41.

Selon un mode de réalisation de l'invention, illustré [Fig. 7], le dispositif de changement de vitesse 20 comporte au niveau de l'arbre de sélection 40 au moins deux cliquets 42 et par exemple pour un engin 1 à 3 vitesses, comporte trois cliquets 42, ou 7 pour un engin à 7 vitesses.

Selon un mode de réalisation de l'invention, le dispositif de changement de vitesse 20 comporte une série de trois ou sept cliquets disposés les uns à la suite des autres selon l'axe longitudinale X2 de l'arbre de sélection 40.

Selon un mode de réalisation de l'invention, le dispositif de changement de vitesse 20 comporte au moins une série d'au moins trois cliquets disposés les uns à la suite des autres selon l'axe longitudinale X2 de l'arbre de sélection 40.

Selon un mode de réalisation de l'invention, le dispositif de changement de vitesse 20 comporte deux séries d'au moins trois cliquets disposés les uns à la suite des autres selon l'axe longitudinale X2 de l'arbre de sélection 40. Les séries étant disposées à 180 degrés l'une de l'autre autour de l'arbre de sélection 40.

Selon un mode de réalisation de l'invention, le dispositif de changement de vitesse 20 comporte trois séries d'au moins trois cliquets disposés les uns à la suite des autres selon l'axe longitudinale X2 de l'arbre de sélection 40. Les séries sont disposées à 120 degrés l'une de l'autre autour de l'arbre de sélection 40.

Les cliquets 42 ont une forme configurée pour coopérer avec les pignons d'entrée Fri. Les cliquets 42 sont disposés dans des évidements 420 traversants formés sur l'arbre de sélection 40.

Selon un mode de réalisation de l'invention, chaque cliquet 42 est configuré pour coopérer avec la bille du moyen de sélection.

Selon un mode de réalisation de l'invention, le cliquet est maintenu en place par un système de blocage radial 44 illustré [fig. 7]. C'est-à-dire un système 44 qui maintient les cliquets 42 plaqués dans leur logement, tout en leur permettant de se soulever via la navette 41.

Selon un mode de réalisation de l'invention, le système de blocage est formée d'une seule pièce. Cela facilite son montage, sa fabrication et limite les couts.

Selon un mode de réalisation de l'invention, le système de blocage 44 comporte une partie plane longitudinale 440.

Selon un mode de réalisation de l'invention, le système 44 comporte au moins deux languettes 441, et par exemple sept languettes 441 dans le cas d'un engin à sept vitesses.

Le système de blocage 44 est disposé sur l'arbre de sélection 40 de façon à ce que chaque languette 441 soit positionnée sur un cliquet 42.

Selon un mode de réalisation de l'invention, chaque cliquet 42 comporte un évidement 421 dont la forme est complémentaire à celle de la languette 441 de façon à ce que la languette 441 soit logée dans l'évidement 421 du cliquet, et ne bouge pas lors du blocage du cliquet. Le système de blocage 44 en rotation prend appuie sur le cliquet 42 de façon à le maintenir plaqué dans l'évidement vers l'intérieur de l'arbre de sélection 40, tout en permettant son soulèvement via la navette 41. Selon un mode de réalisation, la force de rappel du système de blocage 44 s'exerce vers l'intérieur de l'arbre de sélection 40. Selon un mode de réalisation de l'invention, le système de blocage est disposé longitudinalement le long de l'axe X2 dans un sens ou dans l'autre.

Selon un mode de réalisation de l 'invention, le système de changement de vitesse comporte au moins deux ou trois système de blocage 44 en rotation disposés de façon à bloquer deux ou trois séries de cliquets.

Ainsi le cliquet 42 est plaqué dans l'évidement vers l'intérieur de l'arbre de sélection 40, et maintenu en place par la force de rappel du système de blocage 44, et va se soulever au passage de la navette 41.

Lorsque la vitesse est sélectionnée, la navette 41 est positionnée sous le pignon d'entrée Frᵢ correspondant au rapport i sélectionné, qui est alors bloqué en rotation par le soulèvement d'un des cliquets 42, et engrène avec le pignon correspondant de sortie Fi.

Si l'engin 1 roule dans un rapport i, sans en changer, la vis sans fin 21 ne tourne pas.

Selon un mode de réalisation de l'invention, une butée 211, 211' limite à chaque extrémité le déplacement de la navette 41. Selon un autre mode de réalisation de l'invention, le déplacement de la navette est contrôlé par un capteur de position.

Selon un mode de réalisation non illustré, la navette 41 est apte à prendre une position dite position neutre P0 pour laquelle aucun rapport de vitesse n'est engagé.

La portée de la présente invention ne se limite pas aux détails donnés ci-dessus et permet des modes de réalisation sous de nombreuses autres formes spécifiques sans s'éloigner du domaine d'application de l'invention. Par conséquent, les présents modes de réalisation doivent être considérés à titre d'illustration, et peuvent être modifiés sans toutefois sortir de la portée définie par les revendications.

## Revendications

1. Dispositif de changement de vitesse (20) pour engin de mobilité (1) comportant :
- un arbre de sélection (40) dans lequel sont disposées une navette (41) et un moyen de déplacement (21) de la navette (41),
- un actionneur de changement de vitesse (70) agencé pour déplacer la navette (41) le long du moyen de déplacement (21) entre au moins deux positions, et engager un rapport sélectionné,
**caractérisé en ce que** la navette comporte au moins deux moyens de sélection (412) d'un rapport formés chacun par un corps (413) en plastique à l'intérieur duquel sont logés un ressort (414) et une bille (415).

2. Dispositif de changement de vitesse (20) selon la revendication 1, dans lequel la navette (41) comporte au moins deux logements (411) pour l'insertion des moyens de sélection (412).

3. Dispositif de changement de vitesse (20) selon la revendication 1 ou 2, dans lequel la navette (41) comporte trois logements (411) pour trois moyens de sélection (412) disposés à 120 degrés les uns des autres autour de la navette (41).

4. Dispositif de changement de vitesse (20) selon une des revendications 1 à 3, dans lequel les moyens de sélection (412) sont formés chacun par un dispositif à piston à bille (415).

5. Dispositif de changement de vitesse (20) selon la revendication 1, dans lequel le corps (413) est ajusté à la taille de la bille (415) pour permettre son maintien en place.

6. Engin de mobilité (1), notamment engin de mobilité à assistance électrique, comportant un dispositif de changement de vitesse (20) selon l'une quelconque des revendications précédentes.

7. Engin de mobilité selon la revendication 6, dans lequel l'engin (1) est un vélo à assistance électrique.

## Patentansprüche

1. Gangschaltvorrichtung (20) für ein Mobilitätsgerät (1), umfassend: - eine Auswahlwelle (40), in der ein Shuttle (41) und ein Mittel zum Bewegen (21) des Shuttles (41) angeordnet sind, - einen Gangwechselaktuator (70), der angeordnet ist, um den Shuttle (41) entlang des Bewegungsmittels (21) zwischen mindestens zwei Positionen zu bewegen und einen ausgewählten Gang einzulegen, **dadurch gekennzeichnet, dass** der Shuttle mindestens zwei Gangauswahlmittel (412) aufweist, die jeweils durch einen Kunststoffkörper (413) gebildet werden, in dem eine Feder (414) und eine Kugel (415) untergebracht sind.

2. Gangschaltvorrichtung (20) nach Anspruch 1, wobei der Shuttle (41) mindestens zwei Aufnahmen (411) für die Einfügung der Auswahlmittel (412) aufweist.

3. Gangschaltvorrichtung (20) nach Anspruch 1 oder 2, wobei der Shuttle (41) drei Aufnahmen (411) für drei Auswahlmittel (412) aufweist, die in einem Abstand von 120 Grad zueinander um den Shuttle (41) angeordnet sind.

4. Gangschaltvorrichtung (20) nach einem der Ansprüche 1 bis 3, wobei die Auswahlmittel (412) jeweils durch eine Kugelkolbenvorrichtung (415) gebildet werden.

5. Gangschaltvorrichtung (20) nach Anspruch 1, wobei der Körper (413) an die Größe der Kugel (415) angepasst ist, um deren Halterung an Ort und Stelle zu ermöglichen.

6. Mobilitätsgerät (1), insbesondere elektrisch unterstütztes Mobilitätsgerät, umfassend eine Gangschaltvorrichtung (20) nach einem der vorhergehenden Ansprüche.

7. Mobilitätsgerät nach Anspruch 6, wobei das Gerät (1) ein Elektrofahrrad ist.

## Claims

1. Gear change device (20) for a mobility vehicle (1) comprising: - a selection shaft (40) in which are arranged a shuttle (41) and a means of displacement (21) of the shuttle (41), - a gear change actuator (70) arranged to move the shuttle (41) along the displacement means (21) between at least two positions, and engage a selected gear, **characterized in that** the shuttle comprises at least two gear selection means (412) each formed by a plastic body (413) inside which are housed a spring (414) and a ball (415).

2. Gear change device (20) according to claim 1, wherein the shuttle (41) comprises at least two housings (411) for the insertion of the selection means (412).

3. Gear change device (20) according to claim 1 or 2, wherein the shuttle (41) comprises three housings (411) for three selection means (412) arranged at 120 degrees from each other around the shuttle (41).

4. Gear change device (20) according to one of claims 1 to 3, wherein the selection means (412) are each formed by a ball piston device (415).

5. Gear change device (20) according to claim 1, wherein the body (413) is adjusted to the size of the ball (415) to allow it to be held in place.

6. Mobility vehicle (1), particularly an electrically assisted mobility vehicle, comprising a gear change device (20) according to any one of the preceding claims.

7. Mobility vehicle according to claim 6, wherein the vehicle (1) is an electrically assisted bicycle.
